(19) **Europäisches Patentamt European Patent Office Office européen des brevets**

(11) **EP 3 348 747 B1**

(12) **FASCICULE DE BREVET EUROPEEN**

(45) Date de publication et mention
de la délivrance du brevet:
**07.06.2023 Bulletin 2023/23**

(21) Numéro de dépôt: **18151246.8**

(22) Date de dépôt: **11.01.2018**

(51) Classification Internationale des Brevets (IPC):
***E04G 17/06*** (2006.01) ***F16B 37/08*** (2006.01)

(52) Classification Coopérative des Brevets (CPC):
**E04G 17/065; E04G 17/0651; E04G 17/0654;
F16B 37/085; F16B 37/0864;** F16B 37/16

(54) **ECROU À MONTAGE RAPIDE SUR UNE TIGE FILETÉE POUR L'ASSEMBLAGE D'ÉLÉMENTS DE COFFRAGE**

SCHNELLSPANNMUTTER UND GEWINDESTAB FÜR BETONSCHALUNGEN

QUICK-FIT NUT AND THREADED TYING MEANS FOR SHUTTERING ASSEMBLY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.01.2017 FR 1750233**

(43) Date de publication de la demande:
**18.07.2018 Bulletin 2018/29**

(73) Titulaire: **Bouygues Construction
78280 Guyancourt (FR)**

(72) Inventeur: **COURTEL, Nicolas
78280 Guyancourt (FR)**

(74) Mandataire: **Regimbeau
20, rue de Chazelles
75847 Paris Cedex 17 (FR)**

(56) Documents cités:
**EP-A2- 1 854 941    EP-A2- 2 722 465
DE-C1- 19 703 303    DE-U1- 29 505 507**

## Description

### DOMAINE TECHNIQUE GÉNÉRAL ET ART ANTÉRIEUR

L'invention concerne un écrou à montage rapide sur une tige filetée pour l'assemblage d'éléments de coffrage.

Lors de la construction de grands voiles de béton, des coffrages de dimensions importantes nécessitent l'utilisation d'un nombre important de tiges de serrage, assurant la tenue mécanique et la position relative d'éléments de coffrage antagonistes, tels que des banches. Ces tiges de serrage, découpées pour répondre aux besoins du chantier, présentent un filetage à pas long configuré pour permettre de générer les butées axiales nécessaires à l'assemblage du coffrage par simple vissage d'un écrou spécifique.

Le nombre de tiges de serrage nécessaire sur un même coffrage peut être important. La réserve de filetage de chaque tige (longueur sur laquelle le vissage/dévissage est réalisé) peut également être relativement conséquente. La mise en place des écrous de serrage sur les tiges de serrage peut par conséquent représenter une opération très coûteuse en temps homme au regard de la valeur ajoutée de l'opération.

Différentes solutions de dispositifs de serrage à montage rapide ont déjà été proposées. La demande de brevet FR277826 a par exemple proposé une solution d'écrou permettant de monter l'écrou directement en position de serrage, sans avoir à le faire se déplacer le long de la tige, depuis l'extrémité de celle-ci, selon un mouvement hélicoïdal. Le document EP1854941 divulgue aussi un dispositif de serrage à montage rapide.

Ces solutions ne sont néanmoins pas pleinement satisfaisantes.

Notamment, l'effort axial important généré lors du coulage du béton impose que les éléments de serrage présentent une surface de contact avec les banches importante afin de limiter la pression au contact des éléments de coffrage et éviter la dégradation de ces derniers.

Les solutions de systèmes de serrage à montage rapide existantes comprennent des pièces indépendantes et encombrantes, notamment des éléments de serrage et des éléments de contact surfacique donc manquant d'ergonomie et diminuant de ce fait l'efficacité du système.

En outre, l'effort axial généré lors du coulage du béton entraîne de surcroît un couple résistant au desserrage très important, généré par le frottement de la surface de l'élément de coffrage sur la surface de l'écrou et le frottement sur les surfaces de l'écrou au contact du filet de la tige. L'effort nécessaire pour décoincer les écrous lors du démontage du coffrage nécessite l'utilisation d'un outillage spécifique, comme des clés à choc ou des clés à bras de levier très important, qui sont inadaptées dans certains cas lorsque le couple de serrage est trop important.

L'étape de démontage du coffrage souffre donc d'une productivité très faible, notamment à cause du blocage courant de ces éléments de serrage.

### PRÉSENTATION GÉNÉRALE DE L'INVENTION

Un but général de l'invention est de pallier aux inconvénients des écrous à montage rapide de l'état de la technique.

Un des buts de l'invention est de simplifier l'outillage nécessaire au montage et au démontage de l'écrou à montage rapide en l'adaptant à l'outillage classiquement utilisé, et par conséquent l'outillage transporté par l'utilisateur.

Un autre but de l'invention est de faciliter le montage et le démontage de l'écrou à montage rapide, diminuant ainsi la durée de l'opération et incidemment son coût, tout en diminuant la sollicitation physique nécessaire au décoffrage afin notamment de réduire les risques liés aux troubles musculo-squelettiques.

Un autre but de l'invention est de proposer un ensemble compact et léger de pièces liées mécaniquement, améliorant l'ergonomie de l'écrou.

L'invention est défini par la revendication 1, l'invention propose un ensemble formant écrou à montage rapide pour tige de coffrage comportant un corps d'écrou présentant un taraudage intérieur adapté pour coopérer avec un filetage d'une tige de coffrage et une tête d'écrou qui s'étend à une extrémité du corps avec un diamètre plus important que le corps d'écrou et qui est adaptée pour assurer un blocage par appui contre un élément de coffrage, dans lequel le corps d'écrou et la tête d'écrou comprennent chacun plusieurs pièces disjointes formant chacune une portion angulaire du corps d'écrou et de la tête d'écrou et un élément d'assemblage qui s'étend en saillie de la portion angulaire de corps d'écrou au niveau de la tête de l'écrou, l'ensemble comportant également une bague escamotable présentant une ouverture, la bague escamotable étant montée sur le corps d'écrou et adaptée pour être déplacée sur celui-ci entre au moins deux positions :

- une première position dans laquelle l'ouverture maintient par serrage les pièces du corps d'écrou rapprochées les unes des autres, les différentes portions angulaires du corps d'écrou présentant des parois intérieures définissant ensemble un taraudage de l'écrou,
- une deuxième position dans laquelle les portions angulaires de corps d'écrou sont éloignées les unes par rapport aux autres, permettant ainsi au corps d'écrou de coulisser en translation sur la tige filetée;
- les éléments d'assemblage à une extrémité d'une portion angulaire de corps d'écrou comportent d'une part un plateau de contact qui s'étend transversalement selon une première direction à partir de ladite portion angulaire et à une première hauteur de celle-ci et d'autre part une patte d'imbrication qui s'étend transversalement selon une deuxième direction à une hauteur en retrait par rapport à celle du plateau de contact, la patte d'imbrication associée à une portion angulaire du corps d'écrou étant chapeautée par le plateau de contact d'une autre pièce lorsque les différentes portions angulaires sont assemblées pour former l'ensemble formant écrou.

L'ensemble selon l'invention est avantageusement complété par les différentes caractéristiques suivantes prises seules ou en combinaison:

- le plateau de contact d'au moins une portion angulaire du corps d'écrou comporte un doigt d'engrènement qui s'étend en saillie par rapport audit plateau et qui est configuré pour coopérer avec un profil d'engrènement d'un rebord d'une patte d'imbrication d'au moins une autre portion angulaire du corps d'écrou, de manière à assurer le calage tangentiel des différentes portions angulaires du corps d'écrou ;

- la bague escamotable comporte au moins un pion qui est en saillie à l'intérieur de la surface de l'ouverture et qui est configuré pour coopérer avec un chemin de pion formé par juxtaposition de deux surfaces latérales appartenant à deux portions angulaires de corps d'écrou distinctes, ledit chemin de pion étant configuré pour provoquer l'écartement radial desdites portions angulaires d'écrou par le coulissage dudit pion entre lesdites portions angulaires d'écrou lorsque la bague escamotable s'écarte de la tête de l'écrou ;

- la bague escamotable comporte au moins un profil externe d'engrènement configuré pour coopérer avec au moins un doigt d'engrènement des portions angulaires de corps d'écrou ;

- l'ouverture de la bague escamotable présente un profil conique se resserrant vers la jupe de protection ;

- au moins une des portions angulaires de corps d'écrou comporte sur sa surface externe une portée conique, ladite portée conique étant configurée pour coopérer avec l'ouverture de la bague escamotable de manière à ce qu'un déplacement de la bague escamotable entre la première position et la deuxième position entraîne sélectivement un rapprochement ou un éloignement des portions angulaires du corps d'écrou les unes par rapport aux autres ;

- une pente du profil conique de l'ouverture et d'au moins une des portées coniques ainsi qu'un facteur d'adhérence associé au couple de matériaux constitutifs de l'ouverture et ladite portée conique sont configurées pour qu'un effort axial de la bague escamotable sur au moins une des portions angulaires de corps d'écrou entraîne un déplacement radial de ladite portion angulaire du corps d'écrou sans qu'un effort radial de ladite portion angulaire de corps d'écrou sur ladite bague escamotable ne provoque de déplacement axial de ladite bague escamotable ;

- il comporte un ressort exerçant un effort d'extension axial, ledit ressort étant comprimé entre une butée axiale du corps d'écrou et la bague escamotable ;

- la bague escamotable comporte une rondelle dans laquelle est ménagée l'ouverture et une jupe de protection s'étendant depuis ladite rondelle ;

- la jupe de protection de la bague escamotable est configurée pour centrer radialement le ressort conique et le recouvrir dans toutes les positions de la bague ;

- chaque portion angulaire du corps d'écrou comporte une portion de profil à base hexagonale configurée pour former une surface de coopération pour clé hexagonale lorsque les différentes pièces de l'écrou sont assemblées ;

- la tête de l'écrou présente au moins un ergot de frappe défini par des profils coplanaires de différents rebords de frappe d'un plateau de contact, d'une patte d'imbrication et de la rondelle ;

- au moins une des portions angulaires de corps d'écrou comporte sur au moins une surface latérale au moins un index configuré pour maintenir axialement la bague escamotable dans la deuxième position et empêcher un retour de la bague escamotable vers la première position ;

- le diamètre du taraudage formé par les portions angulaires du corps d'écrou est inférieur ou égal au diamètre de la tige filetée lorsque la bague escamotable est forcée jusqu'à arc-boutement vers la tête d'écrou.

## PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :

- La figure 1 est un dessin représentant les différentes pièces composant l'écrou à montage rapide ;
- La figure 2 représente une modélisation 3D de l'écrou assemblé en configuration ouverte ;
- La figure 3 représente une modélisation 3D de l'écrou assemblé en configuration fermée ;

- La figure 4a représente un dessin en 3D isométrique de la bague escamotable, représentée en vue de profil sur la figure 4b ;
- La figure 5a représente un dessin en 3D isométrique d'une des portions angulaires de corps d'écrou, également représenté sur les figures 5b et 5c sous un autre angle de vue ;
- La figure 6 représente schématiquement un chemin de pion d'un point de vue tangentiel, normal au rayon du référentiel de l'écrou ;
- La figure 7 représente une modélisation en 3D isométrique de l'écrou assemblé en configuration fermée ;
- Les figures 8a à 8d représentent en détail les étapes de mise en place de l'écrou sur une tige filetée ;
- La figure 9 représente une vue en coupe arrière d'une modélisation 3D de l'écrou ;
- La figure 10 représente schématiquement les efforts appliqués à une discrétisation angulaire selon l'axe A d'une portion angulaire ; plus précisément la figure 10a représente les efforts appliqués à une discrétisation angulaire selon l'axe A d'une portion angulaire et la figure 10b représente l'effort au niveau du contact conique entre la bague et la portion angulaire ;
- La figure 11 est un tableau de valeurs normalisées de facteurs d'adhérence lors de contacts de divers couples de matériaux.

## DESCRIPTION D'UN OU PLUSIEURS MODES DE MISE EN CEUVRE ET DE RÉALISATION

### Composition de l'écrou

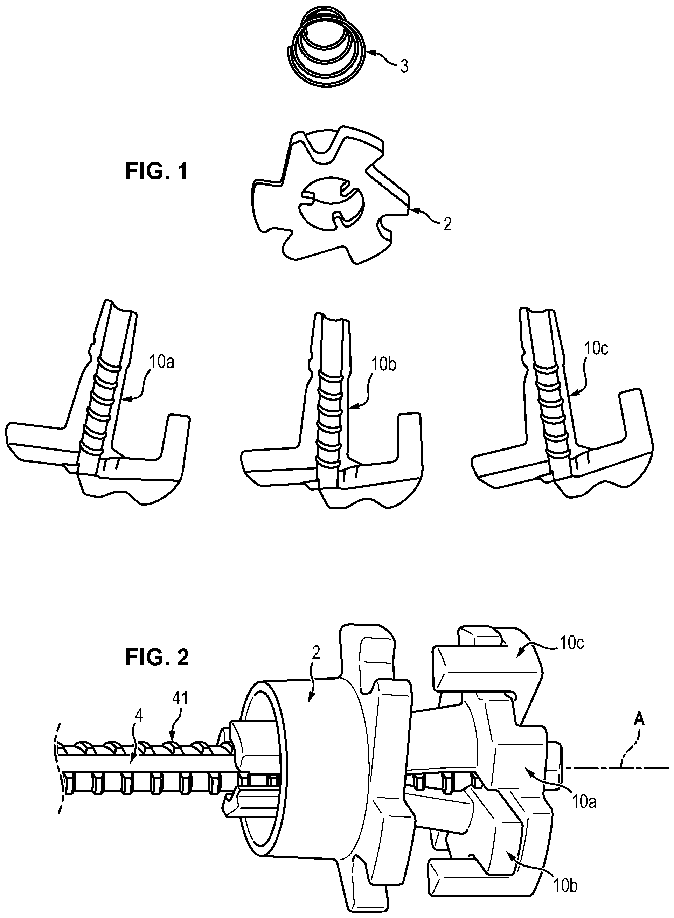

En référence à la figure 1, une forme de réalisation de l'invention est constituée de cinq pièces distinctes :

- Un écrou E comprenant un corps d'écrou 1 et une tête d'écrou, le corps d'écrou 1 et la tête d'écrou étant divisés angulairement le long de l'axe A du taraudage en trois pièces 10a, 10b et 10c distinctes comportant chacune une fraction angulaire de taraudage 33. Le corps d'écrou correspond à la partie de l'écrou E comportant le taraudage tandis que la tête d'écrou correspond à la partie de l'écrou E comportant les éléments d'assemblage et une surface d'appui 5.
- Une bague escamotable 2, maintenant radialement en position les pièces composant le corps d'écrou 1 et permettant de modifier la configuration de l'écrou E selon sa position le long de celui-ci.
- Un ressort conique 3 permettant le maintien en position axiale des pièces composant le corps d'écrou 1 et la bague escamotable 2, et assurant également la cohésion de l'ensemble en faisant obstacle à leur démontage.

Pour la suite de la description, les indications relatives à l'amont, ou le haut de l'écrou à montage rapide E, composé des trois portions angulaires 10a, 10b et 10c du corps d'écrou 1, de la bague escamotable 2 et du ressort 3, et l'aval, ou le bas de l'écrou E, suivront le sens d'insertion d'une tige filetée 4 dans l'écrou E lors du montage de l'écrou E. L'écrou E est donc monté sur la tige filetée 4 en présentant d'abord sa surface d'appui 5 en interface avec les éléments de coffrage permettant de limiter la pression de contact, donc la partie élargie.

Par ailleurs, on comprendra dans ce qui suit qu'une pièce ou une direction est « axiale » lorsque celle-ci s'étend parallèlement à l'axe A de révolution de l'écrou, qui coïncide avec l'axe de la tige lorsque l'écrou est monté sur cette dernière.

### Configurations de l'écrou E et de la tête d'écrou

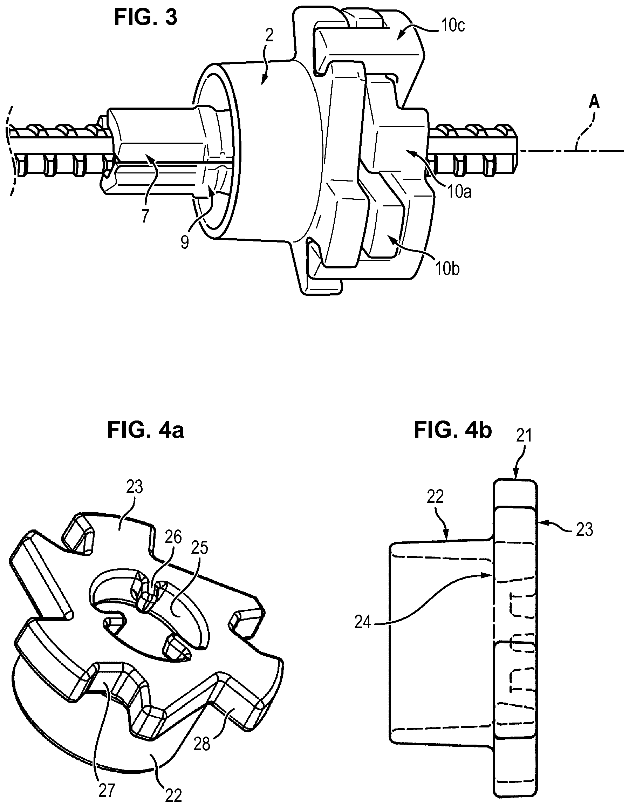

En référence aux figures 2 et 3, la bague escamotable 2 peut prendre deux positions : l'une basse, l'autre haute.

En référence à la figure 2, une position basse de la bague escamotable 2 correspond à une configuration ouverte de l'écrou E. Dans cette configuration, les portions angulaires 10a, 10b et 10c du corps d'écrou 1 sont écartées radialement par rapport à l'axe A du taraudage 8 et tangentiellement les unes par rapport aux autres par la bague escamotable 2 et la bague escamotable 2 est en contact avec la tête d'écrou.

Dans cette configuration, le diamètre interne du corps d'écrou 1 est supérieur au diamètre du filetage 41 de la tige filetée 4, permettant donc de faire coulisser l'écrou E le long de la tige filetée 4 pour le mettre en position à proximité des éléments de coffrage.

En référence à la figure 3, une position haute de la bague escamotable 2 correspond à une configuration fermée de l'écrou E. Dans cette configuration, les portions angulaires 10a, 10b et 10c du corps d'écrou sont en contact, formant le taraudage 8 du corps d'écrou 1, ledit taraudage 8 coopérant avec le filetage 41 de la tige filetée 4.

L'opérateur peut donc serrer l'écrou E contre l'élément de coffrage par l'intermédiaire de l'octaèdre à base hexagonale 7 formé par les portions angulaires 10a, 10b et 10c du corps d'écrou 1 en aval de l'écrou E.

### Bague escamotable

En référence aux figures 4a et 4b, la bague escamotable 2 comporte une rondelle 21 sur sa partie amont et une jupe cylindrique 22 qui borde ladite rondelle en s'étendant à partir de celle-ci vers l'aval.

La rondelle 21 comporte une surface d'appui 23 orthogonale à l'axe de taraudage A, et une surface de poussée 24 du ressort 3 sur la bague escamotable 2, cette surface de poussée 24 étant orthogonale à l'axe du taraudage A et délimitée extérieurement par la jupe 22.

La rondelle 21 est traversée axialement par une ouverture 25 présentant un profil conique se resserrant vers l'aval, et présente sur cette ouverture conique 25 trois pions radiaux 26 ou doigts écarteurs s'étendant radialement depuis la surface de l'ouverture 25 vers l'axe A de la bague escamotable 2.

Le cylindre virtuel tangent à l'extrémité des pions radiaux centré sur l'axe A présente un diamètre supérieur au diamètre du filetage 41 de la tige filetée 4.

Le périmètre de la rondelle 21 comporte également des surfaces fonctionnelles, notamment trois surfaces d'engrènement 27, ainsi que trois surfaces de frappe 28 constituées d'une surface plane s'étendant radialement.

Les pions 26 s'étendent selon des rayons qui se situent dans le prolongement des plans des surfaces de frappe 28 c.

Portions angulaires de corps d'écrou

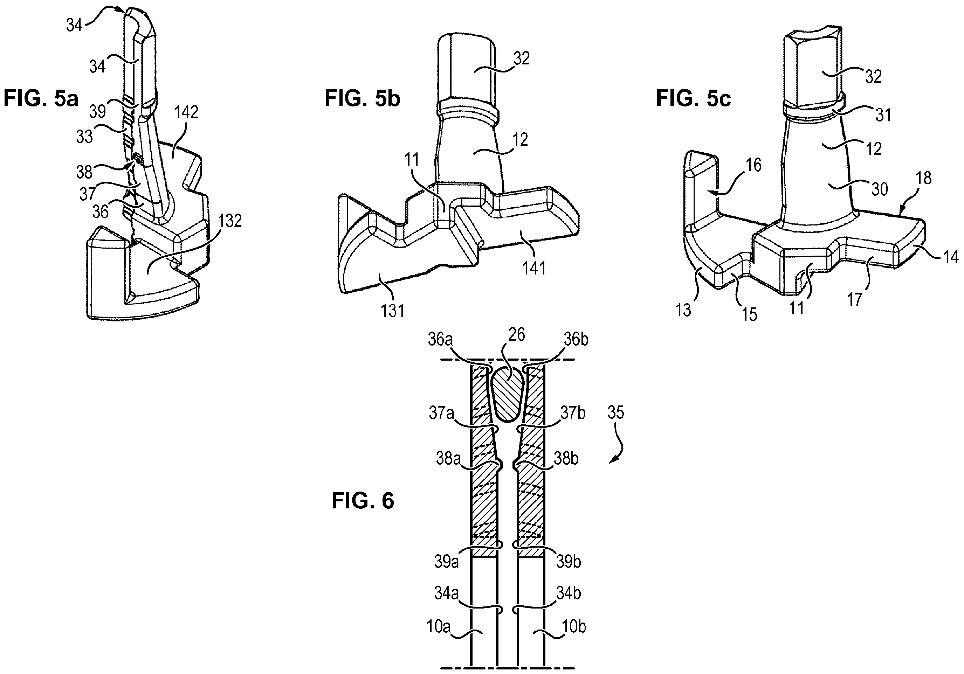

En référence aux figures 5a, 5b et 5c, chacune des portions angulaires 10a, 10b et 10c de l'écrou E présente globalement les mêmes spécifications géométriques, à l'exception des fractions angulaires du taraudage 8. Les fractions angulaires de taraudage du corps d'écrou 1 sont donc décalées de 120° entre elles, correspondant à un décalage axial d'un tiers de pas entre les différentes portions angulaire 10a, 10b et 10c. Par conséquent, une seule portion angulaire de corps d'écrou 10 sera décrite.

Chaque pièce formant portion angulaire de corps d'écrou 10 comporte une partie amont d'assemblage 11 et une partie de serrage 12.

Les éléments d'assemblage 11 d'une portion angulaire de corps d'écrou 10 présentent une surface étagée en plusieurs niveaux, un plateau de contact 13 comportant une surface de contact 131 et une surface d'assemblage 132 et une patte d'imbrication 14 comportant une surface d'assemblage 141 et une surface de butée 142. Les surfaces d'assemblage 132 et 141 respectives du plateau de contact 13 et de la patte d'imbrication partagent le même plan.

Le plateau de contact 13 comporte une surface de frappe 15, constitué d'une surface plane s'étendant radialement, et un doigt d'engrènement 16 s'étendant axialement vers l'aval depuis le plateau de contact 13.

La patte d'imbrication 14 comporte une surface d'engrènement 17 et une surface de frappe 18 constitué d'une surface plane s'étendant radialement selon un plan décalé angulairement de 120° par rapport la surface de frappe 15 du plateau de contact 13.

Le module de serrage 12 d'une portion angulaire de corps d'écrou 10 comporte, d'amont vers l'aval :

- Une portée conique 30 se resserrant vers l'aval,
- Une portion de butée axiale 31 s'étendant radialement,
- Une portion angulaire de surface de coopération pour clé hexagonale 32.

Elle comporte également une surface interne formant une portion angulaire de taraudage 33 et deux surfaces latérales 34 dont les plans de référence sont décalés angulairement de 120° autour de l'axe A.

Les surfaces latérales 34 présentent un profil formant un chemin de pion 35, et sont composées d'amont vers l'aval d'un plan radial 36, un plan incliné 37 par rapport au plan radial 36 autour d'un axe radial, un index 38 s'étendant tangentiellement à partir d'un plan radial 39 pour former un obstacle axial.

En référence à la figure 6, le chemin de pion 35 ainsi formé par la juxtaposition de deux surfaces latérales, 34a et 34b par exemple, présente une largeur supérieure à celle d'un pion 26 au niveau des plans radiaux 36a et 36b parallèles entre eux. Il s'étend axialement en s'affinant vers l'aval au niveau des plans 37a et 37b. Ces deux plans présentent un angle relatif, le chemin de pion atteignant sa largeur minimale au niveau des plans radiaux 39a et 39b. Les index 38a et 38b sont en contact dans la configuration fermée de l'écrou E.

Assemblage

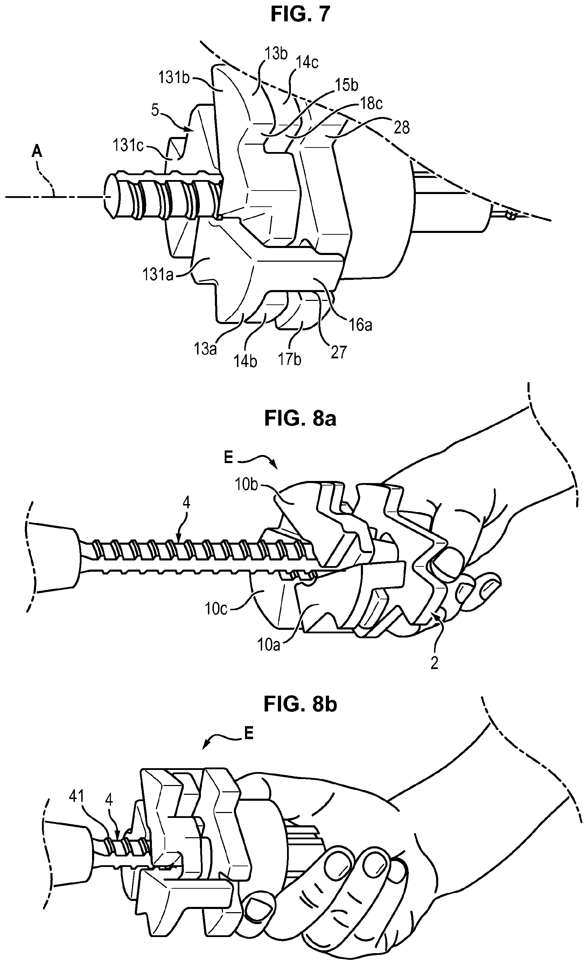

En référence à la figure 7, lorsque l'écrou E est assemblé, qu'il soit en configuration ouverte ou fermée, chacune des portions angulaires du corps d'écrou 10a, 10b et 10c est engagée mécaniquement avec les deux autres.

La géométrie des portions angulaires 10a, 10b et 10c est conçue pour que la patte d'imbrication 14a de la portion angulaire 10a soit tangente au plateau de contact 13b de la portion angulaire 10b, de même que la patte d'imbrication 14c soit tangente au plateau de contact 13b et que la patte d'imbrication 14b soit tangente au plateau de contact 13a.

La surface d'appui 5 de l'écrou ainsi formée par les surfaces de contact 131a, 131b et 131c des plateaux de contact 13a, 13b et 13c est une surface nominalement plane qui est en interface avec les éléments de coffrage. Cette surface est donc la surface effective de l'écrou E.

L'imbrication mécanique des éléments d'assemblage 11a, 11b et 11c de la tête d'écrou entre eux assure une cohésion axiale entre les portions angulaires de corps d'écrou 10a, 10b et 10c.

Les portions angulaires 10a, 10b et 10c sont configurées pour que le doigt d'engrènement 16a issu de la portion angulaire 10a coïncide avec la surface d'engrènement 17b de la patte d'imbrication 14b de la partie angulaire 10b, le doigt d'engrènement 16b de la portion angulaire 10b coïncide avec la surface d'engrènement 17c de la patte d'imbrication 14c de la partie angulaire 10c et le doigt d'engrènement 16c de la portion angulaire 10c coïncide avec la surface d'engrènement 17a de la patte d'imbrication 14a de la partie angulaire 10a.

L'entraînement tangentiel entre les différentes portions angulaires 10a, 10b et 10c est donc assuré par les doigts d'engrènement respectifs de ces éléments.

Chacun de ces doigts d'engrènement 16a, 16b et 16c coïncide également avec une des trois surfaces d'engrènement 27 de la bague escamotable 2, assurant donc également un entraînement tangentiel entre les portions angulaires 10a, 10b et 10c et la bague escamotable 2.

Lorsque l'écrou est en position fermée, les éléments d'assemblage 11a, 11b et 11c sont configurées de telle manière que la surface de frappe 15a soit coplanaire à la surface de frappe 18b, de même que les surfaces de frappe 15c et 18a sont coplanaires et les surfaces de frappe 15b et 18c également. Ces surfaces de frappe sont également chacune respectivement coplanaires aux surfaces de frappe 28 de la bague escamotable 2.

L'association de trois surfaces de frappe coplanaires, par exemple 15a, 18b et 28, forme un ergot de frappe 6 dont la normale est tangentielle à l'écrou E. Un autre ergot de frappe 6 est donc formé par les surfaces de frappe 15c, 18a et 28, le troisième comportant les surfaces de frappe 15b, 18c et 28.

La cohésion radiale des portions angulaires 10a, 10b et 10c est assurée par leur insertion dans la bague escamotable 2, les pions 26 venant chacun coulisser axialement entre les portions angulaires 10a, 10b et 10c dans les chemins de pions 35 formés par la juxtaposition de deux surfaces latérales, par exemple 34a et 34b, la mise en regard des surfaces latérales 34a, 34b et 34c entre elles lors de l'assemblage des portions angulaires 10a, 10b et 10c formant ainsi trois chemins de pion 35.

L'ouverture 25 assure le guidage axial et radial des portions angulaires 10a, 10b et 10c en coulissant au contact des portées coniques 30a, 30b et 30c.

Le calage axial de l'ensemble comportant les portions angulaires 10a, 10b et 10c et la bague escamotable 2 est assuré par un ressort conique 3 prenant appui sur la butée axiale 9, formée par les portions de butée axiale 31a, 31b et 31c, et la surface de poussée 24 de la bague escamotable 2.

Le ressort conique 3 est calé radialement en amont par la jupe 22 et en aval par le corps de l'écrou 1.

Il s'oppose par son action mécanique au démontage de l'écrou E en effectuant un effort de poussée vers l'amont sur la bague escamotable 2 en prenant appui sur la butée axiale 9.

Mise en place de l'écrou

En référence à la figure 8a, l'insertion de la tige filetée 4 dans l'écrou E se fait donc par l'amont de l'écrou E. Lors de cette étape, l'écrou E est en configuration ouverte.

Dans cette configuration, la bague escamotable 2 est déplacée vers l'aval. Les pions 26 coulissent dans les chemins de pion 35, causant l'écartement radial des portions angulaires de corps d'écrou 10a, 10b et 10c.

Une position basse stable de la bague escamotable 2 est assurée par des obstacles axiaux réalisés par les index 38. La compression du ressort 3 dans cette configuration provoque un effort de poussée sur la bague escamotable 2, l'effort étant transmis aux portions angulaires de corps d'écrou 10a, 10b et 10c par l'intermédiaire des pions 26 en butée contre les index 38.

Ce blocage mécanique offre ainsi une ergonomie optimale en garantissant la stabilité de la configuration ouverte de l'écrou E.

En référence à la figure 8b, l'écrou E en configuration ouverte présente un diamètre intérieur supérieur au diamètre du filetage 41 de la tige filetée 4, ce qui permet donc une mise en position rapide de l'écrou par simple coulissage le long de la tige filetée 4.

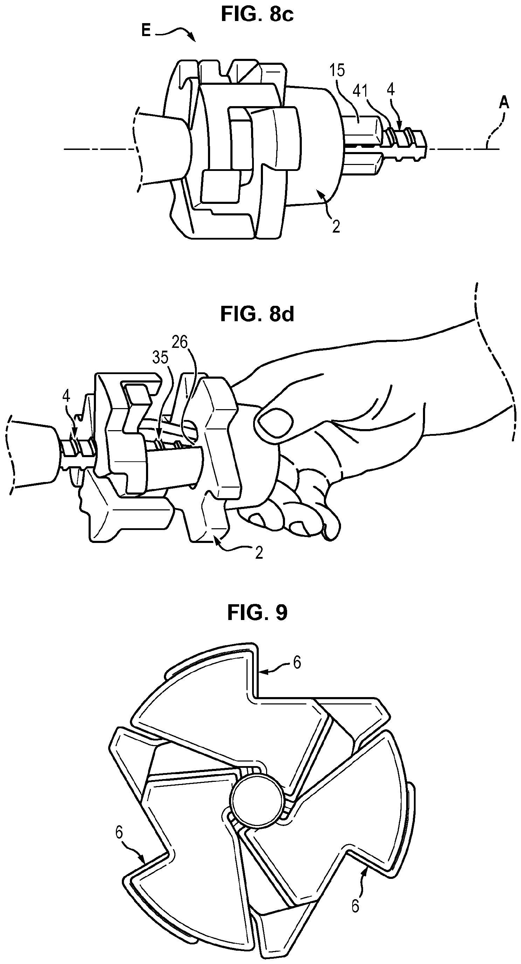

En référence à la figure 8c, lorsque l'écrou E est en position de serrage, une action de l'utilisateur sur la bague escamotable 2 permet aux pions 26 de passer outre les index 38. Le ressort 3 exerce un effort axial sur la bague escamotable 2, provoquant son déplacement axial vers l'amont.

Le coulissage de l'ouverture conique 25 contre les portées coniques 30a, 30b et 30c provoque un déplacement radial vers l'axe A des portions angulaires de corps d'écrou 10a, 10b et 10c. Ce déplacement radial implique une diminution du diamètre intérieur du corps d'écrou 1.

Lorsque la bague escamotable 2 arrive au contact des pattes d'imbrication 14a, 14b et 14c, les doigts d'engrènement 16a, 16b et 16c coïncident avec les surfaces d'engrènement 27 de la bague escamotable 2.

Le diamètre intérieur de l'écrou E est égal au diamètre de la tige filetée 4 au jeu fonctionnel près, le taraudage 8 de l'écrou E coopérant avec le filetage 41 de la tige filetée 4.

En configuration fermée, la jupe 22 de la bague escamotable 2 protège le ressort 3 des contacts extérieurs, tout en découvrant la surface de coopération pour clé hexagonale 7 formé en aval du corps d'écrou 1.

L'écrou E est ensuite vissé manuellement jusqu'à atteindre une position de butée axiale contre les éléments de coffrage, puis serré à l'aide d'un outillage classique grâce à la surface de coopération pour clé hexagonale 7.

Lorsque l'écrou E est serré, l'effort axial du filetage 41 sur le taraudage 8 génère une composante d'effort radial qui tend à écarter radialement les portions angulaires de corps d'écrou 10a, 10b et 10c en liaison conique avec la bague escamotable 2 qui les maintient en position serrée.

La pente des portées coniques 30a, 30b et 30c et de l'ouverture conique 25 est configurée pour générer un frottement empêchant un glissement vers l'aval de la bague escamotable 2 lorsqu'un effort radial est exercé par les portions angulaires de corps d'écrou 10a, 10b et 10c, qui entraînerait un desserrage de l'écrou E.

Les portées coniques 30a, 30b et 30c et la surface conique 25 sont donc configurées pour que le mécanisme soit irréversible, la bague escamotable 2 pouvant causer le déplacement radial des portions angulaires de corps d'écrou 10a, 10b et 10c mais l'effort radial des portions angulaires de corps d'écrou 10a, 10b et 10c ne pouvant provoquer le déplacement de la bague escamotable 2. Cela permet ainsi de sécuriser la position serrée de l'écrou à montage rapide en comportant une liaison irréversible entre la bague escamotable et les portions angulaires de corps d'écrou. En effet une action mécanique de la bague escamotable sur les portions angulaires de corps d'écrou provoque leur déplacement radial, alors qu'une action radiale des portions angulaires de corps d'écrou sur la bague escamotable ne cause aucun déplacement axial de cette dernière.

La pente et le facteur d'adhérence du contact conique entre les portées coniques 30a, 30b et 30c et l'ouverture conique 25 sont configurés pour que l'effort résultant du serrage de l'écrou transmis au niveau du contact conique soit compris dans le cône de frottement du contact conique.

Autrement dit, lorsque l'écrou E est chargé axialement selon l'axe A, la bague escamotable 2 est à la limite du glissement sur les portées coniques 30 sous l'effet de l'effort résultant au niveau du contact conique.

Ainsi, la bague escamotable 2 ne peut se déplacer sous l'effet seul de la charge axiale liée au serrage de l'écrou E, rendant la position de serrage stable.

Cependant, la bague escamotable 2 étant à la limite du glissement, un effort axial léger selon l'axe A exercé sur la bague escamotable 2 pour amener l'écrou dans sa configuration ouverte par un opérateur permet de déplacer la bague escamotable 2 et ainsi de désolidariser les portions angulaires 10, ce qui permet de desserrer l'écrou. La sollicitation physique nécessaire au décoffrage est donc fortement réduite en comparaison avec les écrous de serrage conventionnels.

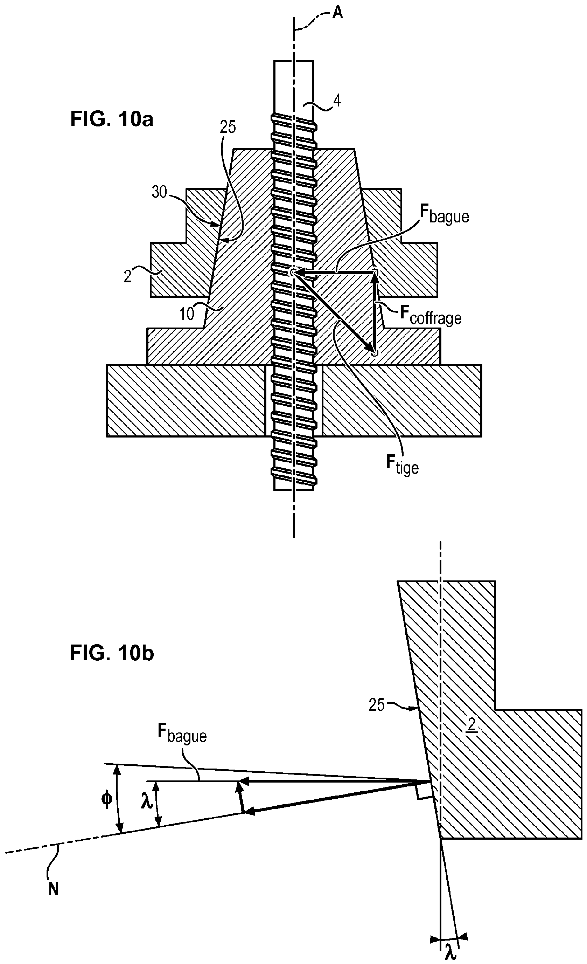

On notera qu'une portion angulaire 10 est soumise à trois efforts, pouvant être discrétisés sur un plan tel qu'illustré en figure 10a :

- un effort $F_{coffrage}$ exercé par l'élément de coffrage sur la portion angulaire 10, comportant une composante axiale,
- un effort $F_{tige}$ exercé par la tige filetée 4 sur la portion angulaire 10, comportant une composante axiale équivalente et opposée à l'effort $F_{coffrage}$ exercé par l'élément de coffrage sur la portion angulaire 10, et une composante radiale induite par l'inclinaison de la surface du filet de la tige 4,
- un effort $F_{bague}$ exercé par la bague escamotable 2 sur la portion angulaire 10.

L'effort résultant au niveau du contact conique, correspondant à l'effort $F_{bague}$ exercé par la bague escamotable 2 sur la portion angulaire 10, ou inversement l'effort exercé par la portion angulaire 10 sur la bague escamotable 2, peut être modélisé dans un plan tel qu'illustré en figure 10b et comporte deux composantes :

- une première composante radiale exercée par la portion angulaire 10 sur la bague 2, résultant de l'effort $F_{tige}$ exercé par la tige filetée 4 sur la portion angulaire 10,
- une seconde composante tangente à la surface de contact entre la bague 2 et la portion angulaire 10, résultant du frottement entre la bague 2 et la portion angulaire 10.

La composante radiale exercée par la portion angulaire 10 sur la bague 2 est inclinée d'un angle $\lambda$ par rapport à la normale N de la surface de contact entre les portées coniques 30a, 30b et 30c et l'ouverture conique 25 (correspondant au contact conique entre les portions angulaires 10 et la bague 2).

Cet angle $\lambda$ correspond à la pente du contact conique entre les portions angulaires 10 et la bague 2 par rapport à l'axe A de la tige 4.

Selon les modèles classiques des lois de frottement (loi de Coulomb), un angle de frottement $\varphi$ représente l'angle d'ouverture d'un cône de frottement par rapport à la normale N de contact entre les portées coniques 30a, 30b et 30c et l'ouverture conique 25.

La composante radiale exercé par la portion angulaire 10 sur la bague 2 est préférentiellement à l'intérieur du cône de frottement, de manière à ce que la bague 2 ne se déplace pas axialement lorsqu'elle est soumise à un effort radial exercé par la portion angulaire 10.

Autrement dit, les portions angulaires 10 et la bague 2 sont configurées de sorte que la pente $\lambda$ du contact conique entre les portions angulaires 10 et la bague 2 est inférieure à l'angle de frottement $\varphi$.

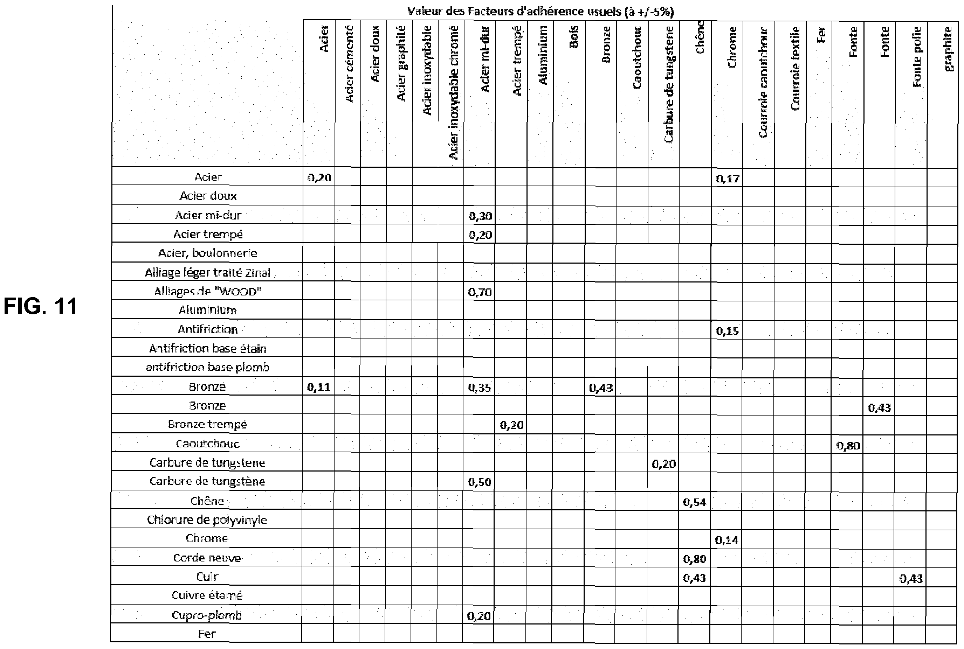

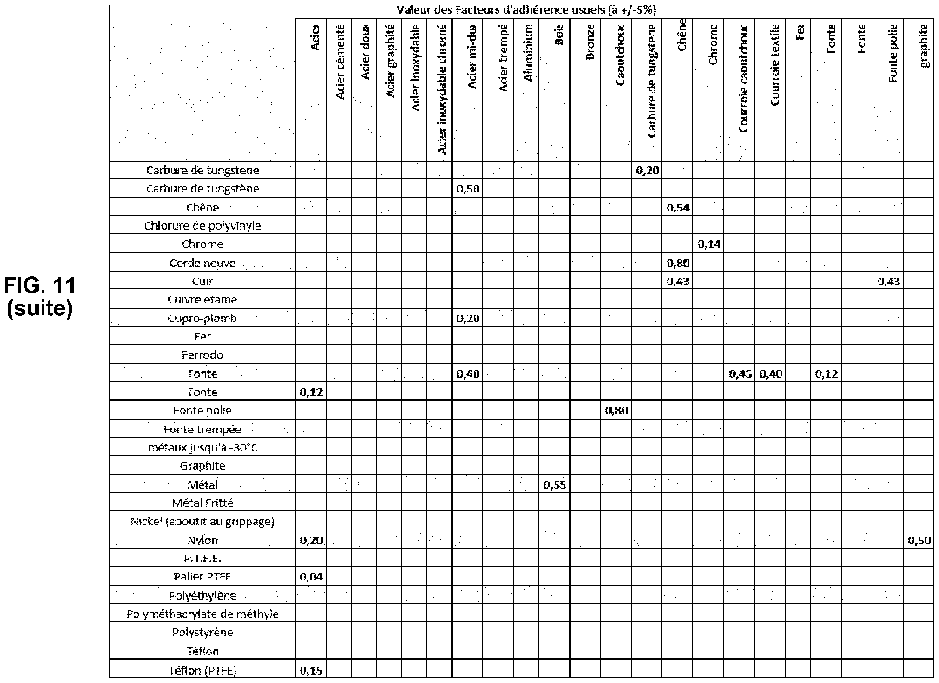

Classiquement, la tangente de l'angle de frottement $\varphi$ est appelée facteur d'adhérence et dépend notamment du couple de matériaux en contact, certaines valeurs de couples usuels étant reproduits en figure 11.

Certains paramètres supplémentaires peuvent influer sur le facteur d'adhérence entre deux pièces, par exemple :

- l'état de surface (rugosité), dépendant notamment des performances et de la finesse du procédé de fabrication,
- la résistance des matériaux au matage,
- les conditions météorologiques (notamment les conditions hygrométriques et la température),
- dans une moindre mesure, l'usure des pièces liée à leur utilisation.

Dans un mode de réalisation préférentiel, la pente $\lambda$ du contact conique entre les portions angulaires 10 et la bague 2 est égale à au moins 90% de l'angle de frottement $\varphi$ entre les portions angulaires 10 et la bague 2. De cette manière, un effort de traction dans la direction axiale peu important sur la bague 2 suffit pour escamoter la bague 2 en position basse et ainsi ouvrir l'écrou E.

En effet, l'effort de traction nécessaire pour escamoter la bague 2 n'a plus besoin que de compenser la composante axiale de la somme du frottement de la bague 2 sur les portions angulaires 10 et de l'effort de la portion angulaire 10 sur la bague 2. Les deux forces étant à la limite de s'annuler, l'opérateur n'aura pas à vaincre des tensions parasites importantes dans l'écrou pour pouvoir l'ouvrir.

Le démontage de l'écrou est donc grandement facilité en comparaison avec les écrous de l'art antérieur.

L'effort $F_{résiduel}$ nécessaire pour escamoter la bague 2 est lié aux paramètres géométriques du filet de la tige 4, à l'angle de frottement $\varphi$ du contact entre la bague 2 et les portions angulaires 10, ainsi que de la pente $\lambda$ du contact conique entre la bague 2 et des portions angulaires 10, et est ainsi proportionnel à l'effort radial $F_{radial}$ induit par l'effort axial $F_{axial}$ appliqué à la tige 4, selon une loi de fonctionnement exprimée ci-dessous :

$$F_{résiduel} = [Tan(\varphi) - Tan(\lambda)] * F_{radial}$$

Sachant que de par la géométrie du filet on s'approche de l'approximation $F_{radial} = F_{axial}$, l'effort résiduel peut être approximé selon l'équation :

$$F_{résiduel} = [Tan(\varphi) - Tan(\lambda)] * F_{axial}$$

A titre d'exemple, pour un effort axial de 150 kN dans une tige 4 filetée de la marque Artéon de diamètre 15/17 mm, correspondant à un ordre de grandeur important dans les tiges pour coffrages à béton, un calcul classique de statique en supposant un exemple de contact à sec fonte/fonte, dont le facteur d'adhérence est de 0,12 et un angle du filet de la tige 4 à 45° impliquant que 150 kN de traction dans la tige 4 induirait approximativement 150 kN d'effort radial sur l'écrou, permet d'estimer qu'un écart angulaire de 0,04° d'angle entre la pente $\lambda$ du contact conique entre les portions angulaires 10 et la bague 2 et l'angle de frottement $\varphi$ induirait un effort de 100 N à exercer sur la bague 2 pour ouvrir l'écrou E.

Dans une situation similaire, un écart angulaire de 0,2° d'angle entre la pente $\lambda$ du contact conique entre les portions angulaires 10 et la bague 2 et l'angle de frottement $\varphi$ induirait un effort de 500 N à exercer sur la bague 2 pour ouvrir l'écrou E.

Cet ordre de grandeur d'effort à exercer sur la bague 2 pour ouvrir l'écrou E est à la portée d'un utilisateur sans utiliser d'équipement particulier, par exemple à l'aide du coté arrache clou d'un marteau de maçon classiquement utilisé par un utilisateur dans le milieu de la construction.

Le côté arrache clou permet notamment de fournir un effet de levier et d'augmenter ainsi l'effort appliqué au niveau de la bague 2 par rapport à l'effort déployé par l'utilisateur.

En référence à la figure 8d, le démontage de l'écrou E est réalisé par le déplacement vers l'aval de la bague escamotable 2. Ce déplacement induirait un écartement radial des portions angulaires de corps d'écrou 10a, 10b et 10c par l'action des pions 26 sur les chemins de pions 35. L'écrou E étant en configuration ouverte, il suffit de le faire coulisser sur la tige filetée 4 pour le retirer.

Une fonction de « frein-filet » est également permise par une action sur la bague escamotable 2. Il arrive que dans certains cas, la configuration du chantier rende une face du coffrage inaccessible à l'utilisateur. Dans ces cas de figure, il est nécessaire pour installer les tiges filetées de les insérer à travers le coffrage depuis la face accessible.

La mise en position de ces tiges filetées se fait via des écrous prisonniers assemblés aux banches et bloquées en rotation par des cages à écrous situées du côté inaccessible du coffrage.

Lors de cette opération de vissage ou de dévissage des tiges filetées dans les écrous prisonniers, les efforts en présence rendent l'opération délicate, notamment en raison du faible diamètre des tiges filetées qui offre une ergonomie faible à l'utilisateur.

Une action de poussée axiale sur la bague escamotable 2 pour forcer le serrage de l'écrou E et génère un frottement permettant de transmettre un couple à la tige filetée 4, l'écrou E formant ainsi une poignée sur la tige filetée et améliorant la prise de l'utilisateur.

En référence à la figure 9, pour générer un effort de serrage supplémentaire de l'écrou E, l'utilisateur peut frapper sur l'un des ergots de frappe 6 formés par la juxtaposition des surfaces de frappe 28, 15a et 18c (et ceux formés par les autres portions angulaires de corps d'écrou) en se servant d'un marteau. Les ergots de frappe 6 sont configurés pour qu'un effort normal leur étant appliqué implique une rotation dans le sens de serrage de l'écrou E.

## Revendications

1. Ensemble formant écrou à montage rapide pour tige de coffrage (4) comportant un corps d'écrou présentant un taraudage intérieur adapté pour coopérer avec un filetage (41) d'une tige de coffrage (4) et une tête d'écrou qui s'étend à une extrémité du corps avec un diamètre plus important que le corps d'écrou et qui est adaptée pour former appui contre un élément de coffrage et ainsi assurer le blocage par appui de l'élément de coffrage,

   dans lequel le corps d'écrou et la tête d'écrou comprennent chacun trois pièces disjointes (10a, 10b et 10c) formant chacune une portion angulaire du corps d'écrou et de la tête d'écrou et un élément d'assemblage (11) qui s'étend en saillie de la portion angulaire de corps d'écrou au niveau de la tête de l'écrou,
   l'ensemble comportant également une bague escamotable (2) présentant une ouverture (25), la bague escamotable (2) étant montée sur le corps d'écrou et adaptée pour être déplacée sur celui-ci entre au moins deux positions :

- une première position dans laquelle l'ouverture (25) maintient par serrage les pièces du corps d'écrou (10a, 10b et 10c) rapprochées les unes des autres, les différentes portions angulaires du corps d'écrou (39a, 39b, 39c) présentant des parois intérieures définissant ensemble un taraudage de l'écrou (8),
- une deuxième position dans laquelle les portions angulaires de corps d'écrou (10a, 10b et 10c) sont éloignées les unes par rapport aux autres, permettant ainsi au corps d'écrou de coulisser en translation sur la tige filetée (4),

dans lequel les éléments d'assemblage (11) à une extrémité d'une portion angulaire de corps d'écrou (10a, 10b et 10c) comportent d'une part un plateau de contact (13a, 13b, 13c) qui s'étend transversalement selon une première direction à partir de ladite portion angulaire et à une première hauteur de celle-ci et d'autre part une patte d'imbrication (14a, 14b, 14c) qui s'étend transversalement selon une deuxième direction à une hauteur en retrait par rapport à celle du plateau de contact (13a, 13b, 13c), la patte d'imbrication (14a, 14b, 14c) associée à une portion angulaire du corps d'écrou (10a, 10b, 10c) étant chapeautée par le plateau de contact (13a, 13b, 13c) d'une autre pièce lorsque les différentes portions angulaires sont assemblées pour former l'ensemble formant écrou (E).

2. Ensemble formant écrou à montage rapide selon la revendication 1, **caractérisé en ce que** le plateau de contact (13a, 13b et 13c) d'au moins une portion angulaire du corps d'écrou (10a, 10b et 10c) comporte un doigt d'engrènement (16a, 16b, 16c) qui s'étend en saillie par rapport audit plateau et qui est configuré pour coopérer avec un profil d'engrènement (17a, 17b, 17c) d'un rebord d'une patte d'imbrication (14a, 14b, 14c) d'au moins une autre portion angulaire du corps d'écrou (10a, 10b et 10c), de manière à assurer le calage tangentiel des différentes portions angulaires du corps d'écrou (10a, 10b et 10c).

3. Ensemble formant écrou à montage rapide selon la revendication 1 ou la revendication 2, **caractérisé en ce que** la bague escamotable (2) comporte au moins un pion (26) qui est en saillie à l'intérieur de la surface de l'ouverture (25) et qui est configuré pour coopérer avec un chemin de pion (35) formé par juxtaposition de deux surfaces latérales (34) appartenant à deux portions angulaires de corps d'écrou (10a, 10b et 10c) distinctes, ledit chemin de pion (35) étant configuré pour provoquer l'écartement radial desdites portions angulaires d'écrou (10a, 10b et 10c) par le coulissage dudit pion (26) entre lesdites portions angulaires d'écrou (10a, 10b et 10c) lorsque la bague escamotable (2) s'écarte de la tête de l'écrou.

4. Ensemble formant écrou à montage rapide selon l'une des revendications 1 à 3, **caractérisé en ce que** la bague escamotable (2) comporte au moins un profil externe d'engrènement (27) configuré pour coopérer avec au moins un doigt d'engrènement (16a, 16b, 16c) des portions angulaires de corps d'écrou (10a, 10b et 10c).

5. Ensemble formant écrou à montage rapide selon l'une des revendications 1 à 4, **caractérisé en ce que** l'ouverture (25) de la bague escamotable (2) présente un profil conique se resserrant vers la jupe de protection (22).

6. Ensemble formant écrou à montage rapide selon l'une des revendications 1 à 5, **caractérisé en ce qu'**au moins une des portions angulaires de corps d'écrou (10a, 10b et 10c) comporte sur sa surface externe une portée conique (30), ladite portée conique (30) étant configurée pour coopérer avec l'ouverture conique (25) de la bague escamotable (2) de manière à ce qu'un déplacement de la bague escamotable (2) entre la première position et la deuxième position entraine sélectivement un rapprochement ou un éloignement des portions angulaires du corps d'écrou (10) les unes par rapport aux autres.

7. Ensemble formant écrou à montage rapide selon la revendication 5 en combinaison avec la revendication 6, **caractérisé en ce qu'**une pente du profil conique de l'ouverture (25) et d'au moins une des portées coniques (30a, 30b, 30c) ainsi qu'un facteur d'adhérence associé au couple de matériaux constitutifs de l'ouverture (25) et ladite portée conique (30) sont configurées pour qu'un effort axial de la bague escamotable (2) sur au moins une des portions angulaires de corps d'écrou (10a, 10b et 10c) entraîne un déplacement radial de ladite portion angulaire du corps d'écrou (10) sans qu'un effort radial de ladite portion angulaire de corps d'écrou (10) sur ladite bague escamotable (2) ne provoque de déplacement axial de ladite bague escamotable (2).

8. Ensemble formant écrou à montage rapide selon l'une des revendications précédentes, **caractérisé en ce qu'**il comporte un ressort (3) exerçant un effort d'extension axial, ledit ressort (3) étant comprimé entre une butée axiale (9) du corps d'écrou et la bague escamotable (2).

9. Ensemble formant écrou à montage rapide selon l'une des revendications 1 à 8, **caractérisé en ce que** la bague escamotable (2) comporte une rondelle (21) dans laquelle est ménagée l'ouverture (25) et une jupe de protection (22) s'étendant depuis ladite rondelle (21).

10. Ensemble formant écrou à montage rapide selon les revendications 8 et 9 en combinaison, **caractérisé en ce que** la jupe de protection (22) de la bague escamotable (2) est configurée pour centrer radialement le ressort conique (3) et le recouvrir dans toutes les positions de la bague (2).

11. Ensemble formant écrou à montage rapide selon l'une des revendications précédentes, **caractérisé en ce que** chaque portion angulaire du corps d'écrou (10a, 10b et 10c) comporte une portion de profil à base hexagonale (32a, 32b, 32c) configurée pour former une surface de coopération pour clé hexagonale (7) lorsque les différentes pièces de l'écrou (E) sont assemblées.

12. Ensemble formant écrou à montage rapide selon l'une des revendications précédentes, **caractérisé en ce que** la tête de l'écrou présente au moins un ergot de frappe (6) défini par des profils coplanaires de différents rebords de frappe d'un plateau de contact (13a, 13b, 13c), d'une patte d'imbrication (14a, 14b, 14c) et de la rondelle (21).

13. Ensemble formant écrou à montage rapide selon l'une des revendications précédentes, **caractérisé en ce qu'**au moins une des portions angulaires de corps d'écrou (10a, 10b, 10c) comporte sur au moins une surface latérale (34a, 34b, 34c) au moins un index (38a, 38b, 38c) configuré pour maintenir axialement la bague escamotable (2) dans la deuxième position et empêcher un retour de la bague escamotable (2) vers la première position.

14. Ensemble formant écrou à montage rapide selon l'une des revendications précédentes, **caractérisé en ce que** le diamètre du taraudage (8) formé par les portions angulaires (10a, 10b, 10c) du corps d'écrou est inférieur ou égal au diamètre de la tige filetée (4) lorsque la bague escamotable (2) est forcée jusqu'à arc-boutement vers la tête d'écrou (E).

**Patentansprüche**

1. Schnellspannmutterbaugruppe für eine Schalungsstange (4) mit einem Mutterkörper, der ein Innengewinde aufweist, das dazu ausgelegt ist, mit einem Gewinde (41) einer Schalungsstange (4) zusammenzuwirken, und einem Mutterkopf, der sich an einem Ende des Körpers mit einem größeren Durchmesser als der Mutterkörper erstreckt und dazu ausgelegt ist, gegen ein Schalungselement anzuliegen und dadurch das Schalungselement durch Anlegen zu sichern,

wobei der Mutterkörper und der Mutterkopf jeweils drei getrennte Teile (10a, 10b und 10c), die jeweils einen Winkelabschnitt des Mutterkörpers und des Mutterkopfes bilden, und ein Verbindungselement (11) umfassen, das sich von dem Winkelabschnitt des Mutterkörpers in Bezug auf den Mutterkopf vorstehend erstreckt, wobei die Anordnung auch einen einziehbaren Ring (2) mit einer Öffnung (25) umfasst, wobei der einziehbare Ring (2) an dem Mutterkörper angebracht und dazu ausgelegt ist, auf diesem zwischen mindestens zwei Positionen verschoben zu werden:

- einer ersten Position, in der die Öffnung (25) die Teile des Mutterkörpers (10a, 10b und 10c) durch Klemmung nahe beieinander hält, wobei die verschiedenen Winkelabschnitte des Mutterkörpers (39a, 39b, 39c) Innenwände aufweisen, die zusammen ein Innengewinde der Mutter (8) definieren,
- einer zweiten Position, in der die Winkelabschnitte des Mutterkörpers (10a, 10b und 10c) voneinander beabstandet sind, wodurch der Mutterkörper translatorisch auf der Gewindestange (4) gleiten kann,

wobei die Verbindungselemente (11) an einem Ende eines Winkelabschnitts des Mutterkörpers (10a, 10b und 10c) einerseits eine Kontaktplatte (13a, 13b, 13c), die sich quer in einer ersten Richtung ausgehend von dem Winkelabschnitt und auf einer ersten Höhe von diesem erstreckt, und andererseits eine Verschachtelungslasche (14a, 14b, 14c) umfasst, die sich quer in einer zweiten Richtung auf einer Höhe erstreckt, die von der Höhe der Kontaktplatte (13a, 13b, 13c) zurückgesetzt ist, wobei die einem Winkelabschnitt des Mutterkörpers (10a, 10b, 10c) zugeordnete Verschachtelungslasche (14a, 14b, 14c) von der Kontaktplatte (13a, 13b, 13c) eines anderen Teils überdeckt wird, wenn die verschiedenen Winkelabschnitte zusammengesetzt werden, um die Mutteranordnung (E) zu bilden.

2. Schnellspannmutteranordnung nach Anspruch 1, **dadurch gekennzeichnet, dass** die Kontaktplatte (13a, 13b und 13c) von mindestens einem Winkelabschnitt des Mutterkörpers (10a, 10b und 10c) einen Eingriffsfinger (16a, 16b, 16c) aufweist, der sich von der Platte aus vorstehend erstreckt und so konfiguriert ist, dass er mit einem Eingriffsprofil (17a, 17b, 17c) eines Randes einer Verschachtelungslasche (14a, 14b, 14c) mindestens eines anderen Winkelabschnitts des Mutterkörpers (10a, 10b und 10c) zusammenwirkt, um so eine tangentiale Verkeilung der verschiedenen Winkelabschnitte des Mutterkörpers (10a, 10b und 10c) zu gewährleisten.

3. Schnellspannmutteranordnung nach Anspruch 1 oder Anspruch 2, **dadurch gekennzeichnet, dass** der einziehbare Ring (2) mindestens einen Stift (26) aufweist, der in das Innere der Oberfläche der Öffnung (25) vorsteht und so konfiguriert ist, dass er mit einer Stiftbahn (35) zusammenwirkt, die durch Nebeneinanderstellen zweier Seitenflächen (34) gebildet wird, die zu verschiedenen zwei Winkelabschnitten des Mutterkörpers (10a, 10b und 10c) gehören, wobei die Stiftbahn (35) so konfiguriert ist, dass sie die radiale Spreizung der Winkelabschnitte der Mutter (10a, 10b und 10c) durch das Gleiten des Stifts (26) zwischen den Winkelabschnitten der Mutter (10a, 10b und 10c) bewirkt, wenn sich der einziehbare Ring (2) vom Mutterkopf wegbewegt.

4. Schnellspannmutteranordnung nach einem der Ansprüche 1 bis 3, **dadurch gekennzeichnet, dass** der einziehbare Ring (2) mindestens ein äußeres Eingriffsprofil (27) aufweist, das so konfiguriert ist, dass es mit mindestens einem Eingriffsfinger (16a, 16b, 16c) der Winkelabschnitte des Mutterkörpers (10a, 10b und 10c) zusammenwirkt.

5. Schnellspannmutteranordnung nach einem der Ansprüche 1 bis 4, **dadurch gekennzeichnet, dass** die Öffnung (25) des einziehbaren Rings (2) ein konisches Profil aufweist, das sich zur Schutzschürze (22) hin verengt.

6. Schnellspannmutteranordnung nach einem der Ansprüche 1 bis 5, **dadurch gekennzeichnet, dass** mindestens einer der Winkelabschnitte des Mutterkörpers (10a, 10b und 10c) auf seiner Außenfläche eine konische Auflagefläche (30) aufweist, wobei die konische Auflagefläche (30) so konfiguriert ist, dass sie mit der konischen Öffnung (25) des einziehbaren Rings (2) zusammenwirkt, so dass eine Verschiebung des einziehbaren Rings (2) zwischen der ersten Position und der zweiten Position selektiv eine Annäherung oder eine Entfernung der Winkelabschnitte des Mutterkörpers (10) zueinander bewirkt.

7. Schnellspannmutteranordnung nach Anspruch 5 in Kombination mit Anspruch 6, **dadurch gekennzeichnet, dass** eine Neigung des konischen Profils der Öffnung (25) und mindestens einer der konischen Auflageflächen (30a, 30b, 30c) sowie ein Haftfaktor, der dem Paar von Materialien zugeordnet ist, aus denen die Öffnung (25) und die konische Auflagefläche (30) bestehen, so konfiguriert sind, dass eine axiale Kraft des einziehbaren Rings (2) auf mindestens einen der Winkelabschnitte des Mutterkörpers (10a, 10b und 10c) eine radiale Verschiebung des genannten Winkelabschnitts des Mutterkörpers (10) bewirkt, ohne dass eine radiale Kraft des genannten Winkelabschnitts des Mutterkörpers (10) auf den genannten einziehbaren Ring (2) eine axiale Verschiebung des genannten einziehbaren Rings (2) bewirkt.

8. Schnellspannmutteranordnung nach einem der vorstehenden Ansprüche, **dadurch gekennzeichnet, dass** sie eine Feder (3) umfasst, die eine axiale Dehnungskraft ausübt, wobei die Feder (3) zwischen einem axialen Anschlag (9) des Mutterkörpers und dem einziehbaren Ring (2) zusammengedrückt wird.

9. Schnellspannmutteranordnung nach einem der Ansprüche 1 bis 8, **dadurch gekennzeichnet, dass** der einziehbare Ring (2) eine Unterlegscheibe (21), in der die Öffnung (25) ausgebildet ist, und eine Schutzschürze (22) aufweist, die sich von der Unterlegscheibe (21) aus erstreckt.

10. Schnellspannmutteranordnung nach Anspruch 8 und 9 in Kombination, **dadurch gekennzeichnet, dass** die Schutzschürze (22) des einziehbaren Rings (2) so konfiguriert ist, dass sie die Kegelfeder (3) radial zentriert und in allen Positionen des Rings (2) abdeckt.

11. Schnellspannmutteranordnung nach einem der vorstehenden Ansprüche, **dadurch gekennzeichnet, dass** jeder Winkelabschnitt des Mutterkörpers (10a, 10b und 10c) einen Profilabschnitt mit hexagonaler Basis (32a, 32b, 32c) aufweist, der so konfiguriert ist, dass er eine Eingriffsfläche für einen hexagonalen Schlüssel (7) bildet, wenn die verschiedenen Teile der Mutter (E) zusammengebaut sind.

12. Schnellspannmutteranordnung nach einem der vorstehenden Ansprüche, **dadurch gekennzeichnet, dass** der Mutterkopf mindestens einen Schlagnocken (6) aufweist, der durch koplanare Profile verschiedener Schlagränder einer Kontaktplatte (13a, 13b, 13c), einer Verschachtelungslasche (14a, 14b, 14c) und der Unterlegscheibe (21) definiert ist.

13. Schnellspannmutteranordnung nach einem der vorstehenden Ansprüche, **dadurch gekennzeichnet, dass** mindestens einer der Winkelabschnitte des Mutterkörpers (10a, 10b, 10c) auf mindestens einer Seitenfläche (34a, 34b, 34c) mindestens einen Index (38a, 38b, 38c) aufweist, der so konfiguriert ist, dass er den einziehbaren Ring (2) axial in der zweiten Position hält und eine Rückkehr des einziehbaren Rings (2) in die erste Position verhindert.

**14.** Schnellspannmutteranordnung nach einem der vorstehenden Ansprüche, **dadurch gekennzeichnet, dass** der Durchmesser des Innengewindes (8), das durch die Winkelabschnitte (10a, 10b, 10c) des Mutterkörpers gebildet wird, kleiner oder gleich dem Durchmesser der Gewindestange (4) ist, wenn der einziehbare Ring (2) bis zur Selbsthemmung in Richtung des Mutterkopfes (E) gedrückt ist.

## Claims

**1.** A quick-assembly nut forming assembly for a formwork rod (4) including a nut body having interior tapping suitable for cooperating with a thread (41) of a formwork rod (4) and a nut head which extends at one end of the body with a greater diameter than the nut body and which is suitable for bearing against a formwork element and thus ensuring the blocking by bearing of the formwork element,

wherein the nut body and the nut head each comprise three disjoint parts (10a, 10b and 10c) each forming an angular portion of the nut body and of the nut head and an assembly element (11) which protrudes from the nut body angular portion at the nut head, the assembly also including a retractable ring (2) having an opening (25), the retractable ring (2) being mounted on the nut body and suitable for being moved on it between at least two positions:

- a first position wherein the opening (25) retains the parts of the nut body (10a, 10b and 10c) close to one another by clamping, the different angular portions of the nut body (39a, 39b, 39c) having interior walls defining together a tapping of the nut (8),
- a second position wherein the angular portions of the nut body (10a, 10b and 10c) are separated from one another, thus allowing the nut body to slide in translation on the threaded rod (4),

wherein the assembly elements (11) at one end of a nut body (10a, 10b and 10c) angular portion include, on the one hand, a contact plate (13a, 13b, 13c) which extends transversely in a first direction starting from said angular portion and at a first height of it, and on the other hand an interlocking leg (14a, 14b, 14c) which extends transversely in a second direction at a height that is set back from that of the contact plate (13a, 13b, 13c), the interlocking leg (14a, 14b, 14c) associated with an angular portion of the nut body (10a, 10b, 10c) being capped by the contact plate (13a, 13b, 13c) of another part when the different angular portions are assembled to form the nut-forming assembly.

**2.** The quick-assembly nut forming assembly according to claim 1, **characterized in that** the contact plate (13a, 13b and 13c) of at least one angular portion of the nut body (10a, 10b et 10c) includes a meshing finger (16a, 16b, 16c) which protrudes from said plate and which is configured to cooperate with a meshing profile (17a, 17b, 17c) of an edge of an interlocking leg (14a, 14b, 14c) of at least one other angular portion of the nut body (10a, 10b and 10c), so as to ensure the tangential chocking of the different angular portions of the nut body (10a, 10b and 10c).

**3.** The quick-assembly nut forming assembly according to claim 1 or claim 2, **characterized in that** the retractable ring (2) includes at least one pin (26) which protrudes inside the surface of the opening (25) and which is configured to cooperate with a pin path (35) formed by the juxtaposition of two lateral surfaces (34) belonging to two distinct nut body angular portions (10a, 10b and 10c), said pin path (35) being configured to cause the radial separation of said nut angular portions (10a, 10b and 10c) by sliding said pin (26) between said nut body (10a, 10b and 10c) angular portions when the retractable ring (2) separates from the head of the nut.

**4.** The quick-assembly nut forming assembly according to one of claims 1 to 3, **characterized in that** the retractable ring (2) includes at least one external meshing profile (27) configured to cooperate with at least one meshing finger (16a, 16b, 16c) of the nut body angular portions (10a, 10b and 10c).

**5.** The quick-assembly nut forming assembly according to one of claims 1 to 4, **characterized in that** the opening (25) of the retractable ring (2) has a conical profile tightening toward the protective skirt (22) .

**6.** The quick-assembly nut forming assembly according to one of claims 1 to 5, **characterized in that** at least one of the nut body (10a, 10b and 10c) angular portions includes, on its external surface, a conical bearing surface (30), said conical bearing surface (30) being configured to cooperate with the conical opening (25) of the retractable ring (2) so that a movement of the retractable ring (2) between the first position and the second position selectively causes bringing together or separation of the angular portions of the nut body (10) with respect to one another.

**7.** The quick-assembly nut forming assembly according to claim 5 in combination with claim 6, **characterized in that** a slope of the conical profile of the opening (25) and of at least one of the conical bearing surfaces (30a, 30b, 30c) as well as an adhesion factor associated with the pair of materials constituting the opening (25) and said conical bearing surface (30) are configured so that an axial force of the retractable ring (2) on at least one of the nut body (10a, 10b and 10c) angular portions causes a radial movement of said angular portion of the nut body (10) without a radial force of said nut body (10) angular portion on said retractable ring (2) causing axial movement of said retractable ring (2).

8. The quick-assembly nut forming assembly according to one of the preceding claims, **characterized in that** it includes a spring (3) exerting an axial extension force, said spring (3) being compressed between an axial abutment (9) of the nut body and the retractable ring (2).

9. The quick-assembly nut forming assembly according to one of claims 1 to 8, **characterized in that** the retractable ring (2) includes a washer (21) wherein the opening (25) is provided, and a protective skirt (22) extending from said washer (21).

10. The quick-assembly nut forming assembly according to claims 8 and 9 in combination, **characterized in that** the protective skirt (22) of the retractable ring (2) is configured to radially center the conical spring (3) and to cover it in all the positions of the ring (2).

11. The quick-assembly nut forming assembly according to one of the preceding claims, **characterized in that** each angular portion of the nut body (10a, 10b and 10c) includes a profile portion with a hexagonal base (32a, 32b, 32c) configured to form a cooperation surface for a hexagonal wrench (7) when the different parts of the nut (E) are assembled.

12. The quick-assembly nut forming assembly according to one of the preceding claims, **characterized in that** the head of the nut has at least one striking lug (6) defined by coplanar profiles of different striking edges of a contact plate (13a, 13b, 13c), of an interlocking leg (14a, 14b, 14c) and of the washer (21).

13. The quick-assembly nut forming assembly according to one of the preceding claims, **characterized in that** at least one of the nut body angular portions (10a, 10b, 10c) includes, on at least one lateral surface (34a, 34b, 34c), at least one index (38a, 38b, 38c) configured to retain the retractable ring (2) axially in the second position and prevent return of the retractable ring (2) to the first position.

14. The quick-assembly nut forming assembly according to one of the preceding claims, **characterized in that** the diameter of the tapping (8) formed by the angular portions (10a, 10b, 10c) of the nut body is less than or equal to the diameter of the threaded rod (4) when the retractable rod (2) is forced toward the nut head (E) until it is braced.

FIG. 1

3

2

10a

10b

10c

FIG. 2

2

41

4

10c

10a

10b

A

**FIG. 3**

**FIG. 4a**

**FIG. 4b**

FIG. 5a

FIG. 5b

FIG. 5c

FIG. 6

## FIG. 7

## FIG. 8a

## FIG. 8b

## FIG. 8c

## FIG. 8d

## FIG. 9

FIG. 10a

FIG. 10b

**FIG. 11**

| | Acier | Acier cémenté | Acier doux | Acier graphité | Acier inoxydable | Acier inoxydable chromé | Acier mi-dur | Acier trempé | Aluminium | Bois | Bronze | Caoutchouc | Carbure de tungstene | Chêne | Chrome | Courroie caoutchouc | Courroie textile | Fer | Fonte | Fonte | Fonte polie | graphite |
|---|---|---|---|---|---|---|---|---|---|---|---|---|---|---|---|---|---|---|---|---|---|---|
| **Valeur des Facteurs d'adhérence usuels (à +/-5%)** | | | | | | | | | | | | | | | | | | | | | | |
| Acier | 0,20 | | | | | | | | | | | | | | 0,17 | | | | | | | |
| Acier doux | | | | | | | | | | | | | | | | | | | | | | |
| Acier mi-dur | | | | | | | 0,30 | | | | | | | | | | | | | | | |
| Acier trempé | | | | | | | 0,20 | | | | | | | | | | | | | | | |
| Acier, boulonnerie | | | | | | | | | | | | | | | | | | | | | | |
| Alliage léger traité Zinal | | | | | | | | | | | | | | | | | | | | | | |
| Alliages de "WOOD" | | | | | | | 0,70 | | | | | | | | | | | | | | | |
| Aluminium | | | | | | | | | | | | | | | | | | | | | | |
| Antifriction | | | | | | | | | | | | | | | 0,15 | | | | | | | |
| Antifriction base étain | | | | | | | | | | | | | | | | | | | | | | |
| antifriction base plomb | | | | | | | | | | | | | | | | | | | | | | |
| Bronze | 0,11 | | | | | | 0,35 | | | | 0,43 | | | | | | | | | | | |
| Bronze | | | | | | | | | | | | | | | | | | | 0,43 | | | |
| Bronze trempé | | | | | | | | 0,20 | | | | | | | | | | | | | | |
| Caoutchouc | | | | | | | | | | | | | | | | | | | 0,80 | | | |
| Carbure de tungstene | | | | | | | | | | | | | 0,20 | | | | | | | | | |
| Carbure de tungstène | | | | | | | 0,50 | | | | | | | | | | | | | | | |
| Chêne | | | | | | | | | | | | | | | 0,54 | | | | | | | |
| Chlorure de polyvinyle | | | | | | | | | | | | | | | | | | | | | | |
| Chrome | | | | | | | | | | | | | | | 0,14 | | | | | | | |
| Corde neuve | | | | | | | | | | | | | | 0,80 | | | | | | | | |
| Cuir | | | | | | | | | | | | | | 0,43 | | | | | | | 0,43 | |
| Cuivre étamé | | | | | | | | | | | | | | | | | | | | | | |
| Cupro-plomb | | | | | | | | 0,20 | | | | | | | | | | | | | | |
| Fer | | | | | | | | | | | | | | | | | | | | | | |

20

EP 3 348 747 B1

Valeur des Facteurs d'adhérence usuels (à +/-5%)

| | Acier | Acier cémenté | Acier doux | Acier graphité | Acier inoxydable | Acier inoxydable chromé | Acier mi-dur | Acier trempé | Aluminium | Bois | Bronze | Caoutchouc | Carbure de tungstène | Chêne | Chrome | Courroie caoutchouc | Courroie textile | Fer | Fonte | Fonte | Fonte polie | graphite |
|---|---|---|---|---|---|---|---|---|---|---|---|---|---|---|---|---|---|---|---|---|---|---|
| Carbure de tungstene | | | | | | | 0,50 | | | | | | 0,20 | | | | | | | | | |
| Carbure de tungstène | | | | | | | | | | | | | | | | | | | | | | |
| Chêne | | | | | | | | | | | | | | 0,54 | | | | | | | | |
| Chlorure de polyvinyle | | | | | | | | | | | | | | | | | | | | | | |
| Chrome | | | | | | | | | | | | | | | 0,14 | | | | | | | |
| Corde neuve | | | | | | | | | | | | | | 0,80 | | | | | | | | |
| Cuir | | | | | | | | | | | | | | 0,43 | | | | | | | 0,43 | |
| Cuivre étamé | | | | | | | | | | | | | | | | | | | | | | |
| Cupro-plomb | | | | | | | 0,20 | | | | | | | | | | | | | | | |
| Fer | | | | | | | | | | | | 0,80 | | | | | | | | | | |
| Ferrodo | | | | | | | | | | | | | | | | | | | 0,12 | | | |
| Fonte | 0,12 | | | | | | 0,40 | | | | | | | | | 0,45 | 0,40 | | | | | |
| Fonte | | | | | | | | | | | | | | | | | | | | | | |
| Fonte polie | | | | | | | | | | | | | | | | | | | | | | |
| Fonte trempée | | | | | | | | | | | | | | | | | | | | | | |
| métaux jusqu'à -30°C | | | | | | | | | | | | | | | | | | | | | | |
| Graphite | | | | | | | | | | 0,55 | | | | | | | | | | | | 0,50 |
| Métal | | | | | | | | | | | | | | | | | | | | | | |
| Métal Fritté | | | | | | | | | | | | | | | | | | | | | | |
| Nickel (aboutit au grippage) | | | | | | | | | | | | | | | | | | | | | | |
| Nylon | 0,20 | | | | | | | | | | | | | | | | | | | | | |
| P.T.F.E. | | | | | | | | | | | | | | | | | | | | | | |
| Palier PTFE | 0,04 | | | | | | | | | | | | | | | | | | | | | |
| Polyéthylène | | | | | | | | | | | | | | | | | | | | | | |
| Polyméthacrylate de méthyle | | | | | | | | | | | | | | | | | | | | | | |
| Polystyrène | | | | | | | | | | | | | | | | | | | | | | |
| Téflon | | | | | | | | | | | | | | | | | | | | | | |
| Téflon (PTFE) | 0,15 | | | | | | | | | | | | | | | | | | | | | |

FIG. 11
(suite)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 277826 A
- EP 1854941 A